# EUROPÄISCHE PATENTANMELDUNG

(11) **EP 3 357 783 A1**
(43) Veröffentlichungstag der Anmeldung: **08.08.2018**
(21) Anmeldenummer: 18154036.0
(22) Anmeldetag: 30.01.2018
(51) Int. Cl.: B61B 12/04, F16F 3/10

(54) **FAHRBETRIEBSMITTEL FÜR EINE LUFTSEILBAHN**

(30) Priorität: 02.02.2017 AT 5002017 U
(71) Anmelder: Bartholet Maschinenbau AG, 8890 Flums (CH)
(72) Erfinder: Wenzin, Placi, 8880 Walenstadt (CH)
(74) Vertreter: Dr. Graf & Partner AG

(57) **Zusammenfassung**

Das Fahrbetriebsmittel (19) für eine Luftseilbahn umfasst eine Aufhängung (20) welche an einem Seil befestigbar ist, und umfasst eine Beförderungseinheit (24) sowie zumindest eine Dämpfungsvorrichtung (1), wobei die Beförderungseinheit (24) über die Dämpfungsvorrichtung (1) mit der Aufhängung (20) verbunden ist.

## Beschreibung

Die Erfindung betrifft ein Fahrbetriebsmittel für eine Luftseilbahn gemäss dem Oberbegriff von Anspruch 1.

### Stand der Technik

Luftseilbahnen umfassen Fahrbetriebsmittel, die von einem oder mehreren Seilen getragen und in der Luft hängend bewegt werden. Solche Fahrbetriebsmittel umfassen eine Aufhängung sowie eine Beförderungseinheit, zum Beispiel eine Kabine, Gondel oder Sessel, wobei die Beförderungseinheit über die Aufhängung am Seil der Luftseilbahn gehalten ist. Das Seil wird an Tragmasten und vorzugsweise auch in Umlenkstationen über Rollen geleitet, wobei die Aufhängung und die Beförderungseinheit Bewegungen in unterschiedlicher Richtung erfährt, insbesondere in vertikaler Richtung, wobei solche Bewegungen für einen sich in der Beförderungseinheit befindlichen Passagier als sehr unangenehm empfunden werden. Die Druckschrift CH693331A5 offenbart zwischen der Aufhängung und der Beförderungseinheit eine Dämpfungsvorrichtung anzuordnen, um insbesondere Schwingung des Fahrbetriebsmittels zu dämpfen. Diese bekannte Dämpfungsvorrichtung weist den Nachteil auf, dass die Bewegungen und Schwingungen der Beförderungseinheit immer noch als unangenehm empfunden werden.

### Darstellung der Erfindung

Aufgabe der Erfindung ist es ein Fahrbetriebsmittel zu bilden, das sich während der Fahrt für einen Passagier angenehmer anfühlt.

Diese Aufgabe wird gelöst mit einem Fahrbetriebsmittel aufweisend die Merkmale von Anspruch 1. Die abhängigen Anspruche 2 bis 9 betreffen weitere vorteilhafte Ausgestaltungen.

Die Aufgabe wird insbesondere gelöst mit einem Fahrbetriebsmittel für eine Luftseilbahn umfassend eine Aufhängung welche an einem Seil befestigbar ist, und umfassend eine Beförderungseinheit sowie zumindest eine Dämpfungsvorrichtung, wobei die Beförderungseinheit über die Dämpfungsvorrichtung mit der Aufhängung verbunden ist, wobei die Dämpfungsvorrichtung ein unteres Lager sowie ein oberes Lager umfasst, welche gegenüberliegend angeordnet sind, wobei eine Feder zwischen dem unteren Lager und dem oberen Lager eingespannt ist, wobei die Dämpfungsvorrichtung ein Verbindungsteil mit einer Tragplatte umfasst, wobei das Verbindungsteil mit der Aufhängung verbunden ist, und wobei ein Dämpfungselement zwischen der Tragplatte und dem unteren Lager eingespannt ist, wobei das untere Lager und die Tragplatte je eine Durchbrechung aufweisen, und wobei die Dämpfungsvorrichtung eine sich in einer Längsrichtung erstreckende Haltestange mit einem oberen Endabschnitt und einem unteren Endabschnitt umfasst, wobei der obere Endabschnitt mit dem oberen Lager verbunden ist, wobei sich die Haltestange ausgehend vom oberen Lager entlang einer Längsachse nach unten erstreckt und durch die Durchbrechungen verläuft, und wobei die Haltestange am unteren Endabschnitt mit der Beförderungseinheit verbunden ist.

Das erfindungsgemässe Fahrbetriebsmittel weist insbesondere ein von den Passagieren als sehr angenehm empfundenes Fahrverhalten auf.

Es wurde erkannt, dass das Fahrbetriebsmittel einer Luftseilbahn sehr tief frequenten Schwingungen ausgesetzt ist, wobei die Beförderungseinheit einerseits mit diesen Frequenzen vibriert und andererseits Schallwellen abstrahlt, wobei Schall unterhalb von 20 Hz als Infraschall bezeichnet wird, welcher nicht oder kaum hörbar ist und insbesondere als Körpervibration wahrgenommen wird. Sämtliche Organe des Menschen weisen eine Eigenfrequenzen auf, wobei die Eigenfrequenzen beispielweise für das Auge bei ca. 20 Hz liegt, bei innen Organen bei ca. 8 Hz, die der Wirbelsäule bei ca. 8 Hz, bei der Muskulatur bei ca. 7-15 Hz, und beim Gehirn bei ca. 18 Hz. Vibrationen unter 20 Hz sowie Infraschall unter 20 Hz können Körperorgane, wie beispielweise das Gehirn oder das Herz im Bereich der Eigenresonanz in Schwingung versetzen. Solche Einwirkungen können zu spontan auftretenden Symptomen wie Kopfschmerzen, Benommenheit oder Konzentrationsmangel führen. Im Frequenzbereich unter 20 Hz besteht keine ausgeprägte Hörempfindung mehr, weil die Tonhöhenempfindung fehlt. Fahrgäste können die tiefen Frequenzen, insbesondere innerhalb von Kabinen, als Ohrendruck wahrnehmen und klagen vielfach über Unsicherheits- und Angstgefühle. Zudem treten Sekundäreffekte auf, so beispielsweise ein Rütteln von Fenstern und Türen oder ein Gläserklirren beim Beförderungsmittel, oder spürbare Vibrationen des Beförderungsmittels und der sich darin befindlichen Gegenstände.
Durch die zum Beispiel in der Schweiz oder in Deutschland immer noch übliche Lärmmessung von Schall mit A-bewerteten Schalldruckpegeln, das heisst mit dem A-Filter (dBA), wird der Spektralbereich unterhalb von 12 Hz nicht erfasst und nicht gemessen. Somit wird vorgetäuscht, als sei unterhalb von 12 Hz kein Schalldruck vorhanden. Messungen ohne den A-Filter haben jedoch ergeben, dass es beim Beförderungsmittel unterhalb von 12 Hz einen Spektralbereich gibt, der durch die bisherigen Messungen ignoriert wurde. Die erfindungsgemässe Dämpfungsvorrichtung 1 weist somit den Vorteil auf, dass mögliche Vibrationen und möglicher Infraschall bei der Beförderungseinheit, insbesondere im Bereich von unter 20 Hz reduziert wird, was zur Folge hat, dass ein Fahrgast das Fahrgefühl subjektiv als sehr angenehm empfindet.

In einer weiteren vorteilhaften Ausgestaltung ist die Elastizität des Dämpfungselementes derart gewählt, dass die Übertragungsfunktion der Dämpfungsvorrichtung einen Knickpunkt ω₂ im Bereich zwischen vorzugsweise 80 Hz und 120 Hz aufweist. Eine derartige Ausgestaltung weist den Vorteil auf, dass Vibrationen im Bereich von beispielsweise über 100 Hz ober beispielsweise über 150 Hz zuverlässig gedämpft werden, sodass in diesem Frequenzbereich auftretende Vibrationen, welche auf die Aufhängung einwirken, nur gedämpft auf das Beförderungsmittel übertragen werden. Ein Beförderungsmittel, das derartig tief frequenten Schwingungen ausgesetzt wäre, würde einerseits mit diesen Frequenzen vibrieren und andererseits Schallwellen abstrahlen. Schall wird als tief frequent bezeichnet, wenn seine vorherrschenden Energieanteile im Frequenzbereich unter 90 Hz liegen. Im Frequenzbereich ab 60 Hz und höher findet der Übergang zu normalen Tonhöhen- und Geräuschempfindungen statt. Schwingungen mit niedriger Frequenz haben eine große Wellenlänge, hochfrequente Schwingungen haben kurze Wellenlängen. So hat z.B. ein Ton von 20 Hz in Luft eine Wellenlänge von 17 m, ein Ton von 50 Hz eine Wellenlänge von 6,80 m, ein Ton von 100 Hz eine Wellenlänge von 3,40 m und ein 1000 Hz-Ton eine entsprechende Wellenlänge von 34 cm. Ein Beförderungsmittel, beispielsweise eine Kabine, kann beispielsweise einen Innenraum in der Grösse von 10 m x 6 m x 3 m aufweisen, sodass der Innenraum Eigenfrequenzen im Bereich zwischen 50 Hz und 120 Hz aufweist. Im Innenraum der Kabine können tieffrequente Geräusche insbesondere zu Zeiten, wenn andere Geräuschbelastungen niedrig sind, schon dann zu erheblichen Belästigungen führen, wenn sie gerade wahrgenommen werden. In einer Kabine normaler Grösse können tieffrequente Eigenresonanzen, auch als Moden bezeichnet, unangenehm angeregt werden. Innerhalb von Kabinen oder Gondeln kann sich ein Stehwellenfeld aufbauen, indem sich durch Wandreflexion hin- und zurücklaufende Wellen überlagern und gegenseitig verstärken oder ganz bzw. teilweise aufheben. Dies führt zu sehr starken Schalldruckpegelanhebungen an bestimmten Orten innerhalb der Kabine oder der Gondel. Das erfindungsgemässe Fahrbetriebsmittel weist somit den Vorteil auf, dass die vorhin genannten Effekte nicht oder nur in gedämpfter Form auftreten, was zur Folge hat, dass der Fahrgast ein angenehmes Fahrgefühl wahrnimmt.

Die Erfindung wird nachfolgend an Hand von Ausführungsbeispielen im Detail beschrieben.

### Kurze Beschreibung der Zeichnungen

Die zur Erläuterung der Ausführungsbeispiele verwendeten Zeichnungen zeigen:
- Fig. 1: eine perspektivische Ansicht einer Aufhängung für ein Fahrbetriebsmittel sowie vier mit der Aufhängung verbundene Dämpfungsvorrichtungen;
- Fig. 2: eine Frontansicht der Aufhängung gemäss Fig. 1;
- Fig. 3: einen Längsschnitt einer Dämpfungsvorrichtung;
- Fig. 4: beispielhaft eine Transferfunktion eines Ausführungsbeispiel der Dämpfungsvorrichtung.

Grundsätzlich sind in den Zeichnungen gleiche Teile mit gleichen Bezugszeichen versehen.

### Wege zur Ausführung der Erfindung

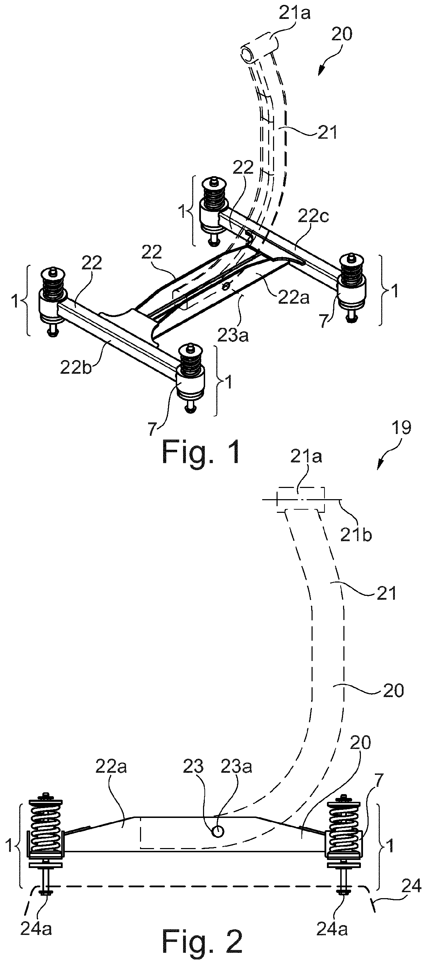

Figur 2 zeigt eine Frontansicht eines Fahrbetriebsmittels 19 umfassend eine Aufhängung 20, eine Dämpfungsvorrichtung 1 sowie eine Beförderungseinheit 24, wobei die Beförderungseinheit 24 über die Dämpfungsvorrichtung 1 mit der Aufhängung 20 verbunden ist. Figur 1 zeigt eine perspektivische Ansicht der in Figur 2 dargestellten Aufhängung 20. Die Aufhängung 20 umfasst einen Tragarm 21, welcher am einen Ende über eine Hülse 21a, definierend eine Drehachse 21b, mit einer nicht dargestellten Seilklemme verbunden ist, und welche am anderen Ende über ein Drehgelenk 23, definierend eine Drehachse 23a, mit einer Trageinrichtung 22 verbunden ist. Die Trageinrichtung 22 ist H-förmig ausgestaltet und umfasst einen Hauptträger 22a sowie einen ersten Querträger 22b sowie einen zweiten Querträger 22c. Das in den Figuren 1 und 2 dargestellte Ausführungsbeispiel umfasst vier Dämpfungsvorrichtungen 1, über welche die Beförderungseinheit 24 an vier Ecken mit der Trageinrichtung 22 verbunden ist. Jede Dämpfungseinheit 1 umfasst ein Verbindungsteil 7, welches fest mit der Trageinheit 22 verbunden ist oder ein Teil der Trageinheit 22 bildet. Die Trageinrichtung 22 kann auch andere Formen aufweisen, und beispielsweise eine dreieckige Grundform aufweisen, mit drei Dämpfungsvorrichtungen 1, an welchen die Beförderungseinheit 24 verbunden ist.

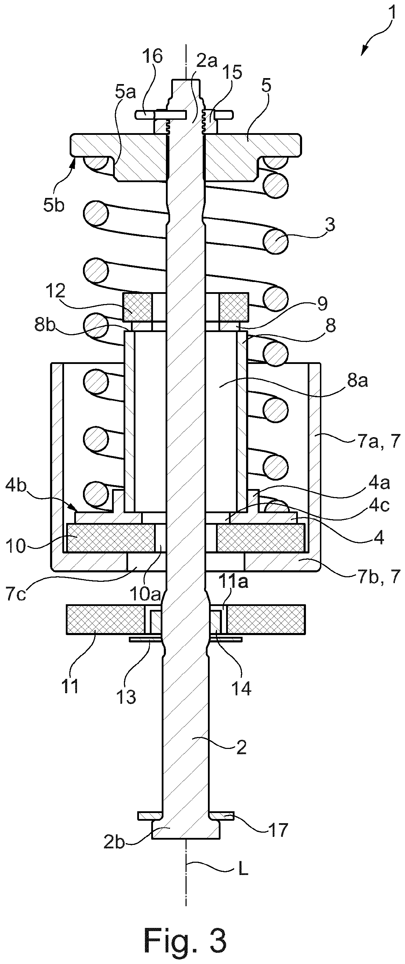

Figur 3 zeigt einen Längsschnitt eines Ausführungsbeispiels einer Dämpfungsvorrichtung 1. Die Dämpfungsvorrichtung 1 umfasst ein unteres Lager 4 mit einer Führungshülse 4a sowie ein oberes Lager 5 mit einer Innenführung 5a, wobei eine Feder 3 zwischen dem unteren Lager 4 und dem oberen Lager 5 eingespannt und seitlich geführt ist. Die Dämpfungsvorrichtung 1 umfasst zudem ein Verbindungsteil 7 mit einer Tragplatte 7b, wobei das Verbindungsteil 7 vorzugsweise starr beziehungsweise fest mit der Aufhängung 20 bzw. der Trageinheit 22 verbunden ist. Ein Dämpfungselement 10 ist zwischen der Tragplatte 7b und dem unteren Lager 4 eingespannt, wobei das untere Lager 4 und die Tragplatte 7b einen Durchlass, vorzugsweise eine Durchbrechung 10a, 7c aufweisen, wobei die Durchbrechung vorzugsweise in der Mitte angeordnet ist. Die Dämpfungsvorrichtung 1 umfasst eine sich in einer Längsrichtung L erstreckende Haltestange 2 mit einem oberen Endabschnitt 2a und einem unteren Endabschnitt 2b. Der obere Endabschnitt 2a ist mit dem oberen Lager 5 verbunden. Diese Verbindung kann kraftschlüssig, formschlüssig, stoffschlüssig oder auch eine Kombination davon sein.

Die Haltestange 2 erstreckt sich ausgehend vom oberen Lager 5 entlang einer Längsachse L nach unten und verläuft durch die Durchbrechungen 10a, 7c, wobei die Haltestange 2 am unteren Endabschnitt 2b vorzugsweise starr mit der Beförderungseinheit 24 verbunden ist. Die wendelförmig verlaufende Feder 3 ist vorzugsweise als Stahlfeder ausgestaltet. Die Feder 3 weist vorteilhafterweise an beiden Enden je eine eben ausgestaltete Endfläche auf, welche je auf einer Auflagefläche 4b, 5b anliegt. Die Feder 3 könnte auch aus einem Kunststoff bestehen oder Kunststoff umfassen, beispielsweise Gummi oder ein Elastomer. Das Dämpfungselement 10 weist elastische Eigenschaften auf und besteht beispielsweise aus einem Kunststoff wie einem Elastomer oder Polyurethan.

Das Dämpfungselement 10 besteht vorzugsweise aus einem Vollmaterial, und weist eine Durchbrechung bzw. Durchtrittsöffnung 10a auf, die vorzugsweise als eine durchgehende Bohrung ausgestaltet ist, welche im Zentrum des Dämpfungselementes 10 angeordnet ist. Das Dämpfungselement 10 könnte auch aus mehreren separaten Teilelementen bestehen, welche zusammengefügt das Dämpfungselement 10 sowie in dessen Mitte eine Durchtrittsöffnung 10a ausbilden. Zudem weist die Tragplatte 7b eine Durchbrechungen bzw. Öffnung 7c auf. Die Durchbrechungen 10a, 7c weisen vorzugsweise ein Spiel im Bereich von 1 bis 10 mm auf, sodass die Haltestange 2 eine Querbewegung, quer zur Längsrichtung L ausführen kann. Vorzugsweise weist die Durchbrechung 10a einen kleineren Innendurchmesser auf als die Durchbrechung 7c, sodass die Haltestange 2 bei einer Querbewegung zuerst mit dem Dämpfungselement 10 in Berührung gelangt und die Querbewegung durch die elastischen Eigenschaften des Dämpfungselementes 10 gedämpft werden.

Vorteilhafterweise sind das untere Lager 4, das obere Lager 5 sowie das Dämpfungselement 10 bezüglich der Längsachse L als rotationssymmetrische Körper ausgestaltet.

Vorteilhafterweise ist am unteren Lager 4 eine sich in Richtung zum oberen Lager 5 hin erstreckende Hülse 8 angeordnet, wobei die Feder 3 ausserhalb deren Innenraum 8a verläuft. Vorteilhafterweise ist zwischen der Hülse 8 und dem oberen Lager 5 ein hohlzylinderförmiges erstes Anschlagelement 12 angeordnet, welches die maximal mögliche Kompression der Feder 3 begrenzt. Vorteilhafterweise besteht das Anschlagelement 12 aus einem elastischen Material, vorzugsweise aus Kunststoff.

Vorteilhafterweise umfasst die Hülse 8 eine zum oberen Lager 5 hin ausgerichtete Stirnseite 8b, wobei an der Stirnseite 8b ein Distanzstück 9 angeordnet ist, an welchem das hohlzylinderförmige erste Anschlagelement 12 anliegt.

Vorteilhafterweise umfasst die Haltestange 2 ein drittes Lager 13, welches zwischen der Tragplatte 7b und dem unteren Endabschnitt 2b angeordnet ist, wobei zwischen der Tragplatte 7b und dem dritten Lager 13 ein zweites Anschlagelement 11 angeordnet ist, welches die maximale Dehnung der Feder 3 begrenzt. Vorteilhafterweise besteht das zweite Anschlagelement 11 aus einem elastischen Material, vorzugsweise aus Kunststoff. Das zweite Anschlagelement 11 ist vorzugsweise hohlzylinderförmig ausgestaltet und weist im Zentrum eine durchgehende Bohrung 11a auf, wobei die Haltestange 2 durch die Bohrung 11a verläuft.

Vorteilhafterweise weisen die Bohrungen 10a, 11a, 12a des Dämpfungselementes 10 sowie des ersten und zweiten Anschlagelementes 11,12 einen grösseren Innendurchmesser aufweisen als der Aussendurchmesser des Haltestange 2, derart, dass sich ein Spalt ausbildet, insbesondere ein Spalt von mindestens 2 mm, um eine Querbewegung der Haltestange 2 zu ermöglichen.

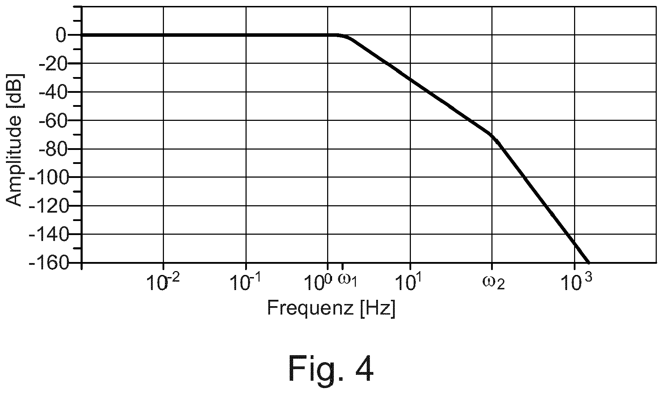

Figur 4 zeigt in einem Bodediagramm eine vorteilhafte Übertragungsfunktion beziehungsweise eine vorteilhafte Transferfunktion der Dämpfungsvorrichtung 1, das heisst die Amplitude der Dämpfungsvorrichtung 1 in Funktion der Frequenz ω, wobei sowohl die Amplitude als auch die Frequenz logarithmisch dargestellt sind. In einer vorteilhaften Ausgestaltung ist die Elastizität der Feder 3 derart gewählt, dass die Übertragungsfunktion der Dämpfungsvorrichtung 1 einen Knickpunkt ω₁ im Bereich zwischen 1 Hz und 10 Hz aufweist.

Das in Figur 4 dargestellte Beispiel zeigt den Knickpunkt ω₁ bei 2 Hz. Eine derartige Ausgestaltung weist den Vorteil auf, dass Vibrationen oberhalb von beispielsweise 20 Hz zuverlässig gedämpft werden, sodass in diesem Frequenzbereich auftretende Vibrationen, welche auf die Aufhängung 20 einwirken, nur gedämpft auf das Beförderungsmittel 24 übertragen werden. In einer weiteren vorteilhaften Ausgestaltung ist die Elastizität des Dämpfungselementes 10 derart gewählt, dass die Übertragungsfunktion der Dämpfungsvorrichtung 1 einen Knickpunkt ω₂ im Bereich zwischen 80 Hz und 120 Hz aufweist. Einem Fachmann ist auf Grund von vorgegebenen, allgemein bekannten physikalischen Gesetzten bekannt, wie die Elastizität beziehungsweise die Steifigkeit der einzelnen Elemente der Dämpfungsvorrichtung 1 zu berechnen und auswählen sind, um eine Dämpfungsvorrichtung 1 aufweisend die hierhin beschriebene Übertragungsfunktion herzustellen.

Das in Figur 4 dargestellte Beispiel zeigt den Knickpunkt ω₂ bei 100 Hz. Eine derartige Ausgestaltung weist den Vorteil auf, dass Vibrationen im Bereich über 100 Hz zuverlässig gedämpft werden, sodass in diesem Frequenzbereich auftretende Vibrationen, welche auf die Aufhängung 20 einwirken, nur gedämpft auf das Beförderungsmittel 24 übertragen werden, sodass diese Vibrationen und allenfalls durch die Vibrationen verursachter Schall im Beförderungsmittel 24 gedämpft oder gar nicht mehr auftreten.

Das Beförderungsmittel 24 könnte insbesondere als eine Kabine, eine Gondel, ein Sessel oder eine Mehrzahl von Sesseln ausgestaltet sein.

## Patentansprüche

1. Fahrbetriebsmittel (19) für eine Luftseilbahn, umfassend eine Aufhängung (20) welche an einem Seil befestigbar ist, sowie umfassend eine Beförderungseinheit (24) sowie zumindest eine Dämpfungsvorrichtung (1), wobei die Beförderungseinheit (24) über die Dämpfungsvorrichtung (1) mit der Aufhängung (20) verbunden ist, wobei die Dämpfungsvorrichtung (1) ein unteres Lager (4) sowie ein oberes Lager (5) umfasst, welche gegenüberliegend angeordnet sind, wobei die Dämpfungsvorrichtung (1) ein Verbindungsteil (7) mit einer Tragplatte (7b) umfasst, wobei das Verbindungsteil (7) mit der Aufhängung (20) verbunden ist, und wobei das untere Lager (4) und die Tragplatte (7b) je einen Durchlass (4c, 7c) aufweisen, und wobei die Dämpfungsvorrichtung (1) eine sich in einer Längsrichtung (L) erstreckende Haltestange (2) mit einem oberen Endabschnitt (2a) und einem unteren Endabschnitt (2b) umfasst, wobei der obere Endabschnitt (2a) mit dem oberen Lager (5) verbunden ist, wobei sich die Haltestange (2) ausgehend vom oberen Lager (5) entlang einer Längsachse (L) nach unten erstreckt und durch den Durchlass (4c, 7c) verläuft, und wobei die Haltestange (2) am unteren Endabschnitt (2b) mit der Beförderungseinheit (24) verbunden ist, **dadurch gekennzeichnet, dass** eine Feder (3) zwischen dem unteren Lager (4) und dem oberen Lager (5) eingespannt ist, dass ein Dämpfungselement (10) zwischen der Tragplatte (7b) und dem unteren Lager (4) eingespannt ist, dass das Dämpfungselement (10) eine Durchtrittöffnung (10a) aufweist, und dass die Haltestange (2) durch die Durchtrittsöffnung (10a) verläuft.

2. Fahrbetriebsmittel nach Anspruch 1, **dadurch gekennzeichnet, dass** das untere Lager (4), das obere Lager (5) sowie das Dämpfungselement (10) bezüglich der Längsachse (L) als rotationssymmetrische Körper ausgestaltet sind.

3. Fahrbetriebsmittel nach Anspruch 2, **dadurch gekennzeichnet, dass** das Dämpfungselement (10) aus einem Vollmaterial besteht, und dass die Durchtrittsöffnung (10a) als durchgehende Bohrung ausgestaltet ist, welche im Zentrum des Dämpfungselementes (10) angeordnet ist.

4. Fahrbetriebsmittel nach einem der vorhergehenden Ansprüche, **dadurch gekennzeichnet, dass** das untere Lager (4) und/oder das obere Lager (5) eine zylinderförmige, in Längsrichtung (L) verlaufende Mantelfläche (4a, 5a) aufweist, und dass die Feder (3) die zylinderförmige Mantelfläche (4a, 5a) umschliesst.

5. Fahrbetriebsmittel nach einem der vorhergehenden Ansprüche, **dadurch gekennzeichnet, dass** am unteren Lager (4) eine sich in Richtung zum oberen Lager (5) hin erstreckende Hülse (8) angeordnet ist, und dass zwischen der Hülse (8) und dem oberen Lager (5) ein erstes Anschlagelement (12) angeordnet ist.

6. Fahrbetriebsmittel nach einem der vorhergehenden Ansprüche, **dadurch gekennzeichnet, dass** die Haltestange (2) ein drittes Lager (13) umfasst, welches zwischen der Tragplatte (7b) und dem unteren Endabschnitt (2b) angeordnet ist, und dass zwischen der Tragplatte (7b) und dem dritten Lager (13) ein zweites Anschlagelement (11) angeordnet ist.

7. Fahrbetriebsmittel nach Anspruch 6, **dadurch gekennzeichnet, dass** das zweite Anschlagelement (11) hohlzylinderförmig ausgestaltet ist und im Zentrum eine durchgehende Bohrung (11a) aufweist, wobei die Haltestange (2) durch die Bohrung (11a) verläuft.

8. Fahrbetriebsmittel nach einem der vorhergehenden Ansprüche, **dadurch gekennzeichnet, dass** die Elastizität der Feder (3) derart gewählt ist, dass eine Übertragungsfunktion der Dämpfungsvorrichtung (1) einen Knickpunkt (ω₁) im Bereich zwischen 0,2 Hz und 10 Hz aufweist.

9. Fahrbetriebsmittel nach einem der vorhergehenden Ansprüche, **dadurch gekennzeichnet, dass** die Elastizität des Dämpfungselementes (10) derart gewählt ist, dass eine Übertragungsfunktion der Dämpfungsvorrichtung (1) einen Knickpunkt (ω₂) im Bereich zwischen 80 Hz und 120 Hz aufweist.

10. Luftseilbahn umfassend eine Mehrzahl von Fahrbetriebsmitteln (19) nach einem der vorhergehenden Ansprüche.
